# EUROPÄISCHE PATENTSCHRIFT

(11) **EP 0 615 929 B1**
(45) Veröffentlichungstag und Bekanntmachung des Hinweises auf die Patenterteilung: **20.11.1996**
(21) Anmeldenummer: 94102018.2
(22) Anmeldetag: 10.02.1994
(51) Int. Cl.: B65G 47/08, B65G 47/244, B65G 57/24

(54) **Drehkreuzpalettierer**
Turnstile palletizer
Palettiseur à tourniquet

(30) Priorität: 18.03.1993 DE 4308581
(43) Veröffentlichungstag der Anmeldung: 21.09.1994
(73) Patentinhaber: Langhammer, Heinrich, D-67304 Eisenberg (DE)
(72) Erfinder: Langhammer, Heinrich, D-67304 Eisenberg (DE)
(74) Vertreter: Zellentin, Wiger, Dipl.-Ing.

(56) Entgegenhaltungen:
- EP-A- 0 257 438
- FR-A- 2 085 397
- FR-A- 2 376 045
- US-A- 3 161 302
- US-A- 4 067 456

## Beschreibung

Die vorliegende Erfindung betrifft eine Vorrichtung zum Sammeln, Ausrichten und Ablegen von zu Einheiten verpackten Gegenständen wie insbesondere Haushaltspapierrollen auf einem Zwischenboden Zur Ablage auf Paletten.

Dabei werden die Einheiten auf dem Zwischenboden in vorgebbaren Mustern, d.h. teilweise um 90° gedreht mit den übrigen Einheiten kombiniert, um einmal platzsparend ablegen zu können, zum anderen aber auch um durch Überlappen von darunter liegenden Stößen zwischen Einheiten stabile Schichtungen zu bilden.

Aus der EP 0 330 994 ist eine solche Vorrichtung bekannt, bei welcher jedoch lediglich die gesamte Lage auf der Palette zur nächsten um 90° gedreht werden kann, die Einheiten selbst sind jedoch in jeder Lage parallel ausgerichtet.

Ebenso beschreibt die DD-PS 131 363 eine solche Vorrichtung, bei der ein drehbarer Hubtisch parallel ausgerichtete Lagen sammelt und dreht.

Mit derartigen Vorrichtungen lassen sich die Einheiten jedoch nur mit Geschwindigkeiten zwischen etwa 20 bis 30 je Minute zu Lagen auf der Palette zusammenführen.

Aus der EP-A-0.257.438 ist es weiterhin bekannt Palettenlagen durch seitliches Verschieben und Drehen einzelner Einheiten verpackter gegenstände zu erzeugen.

Die vorliegende Erfindung hat sich vordiesem Hintergrund die Aufgabe gestellt, eine Vorrichtung der eingangs geschilderten Art zu schaffen, mit der die Sammelgeschwindigkeit bis zu 70 Einheiten je Minute realisiert werden können.

Die Lösung dieser Aufgabe gelingt mit Hilfe einer Vorrichtung zum Sammeln von zu Einheiten verpackten Gegenständen auf Paletten gemäß Anspruch 1, wobei die Einheiten ausgerichtet dieser Vorrichtung zugeführt werden, welche eine Vielzahl von angetriebenen, zu einer Förderebene ausgerichteten Rollen aufweist. Am Eingang der Förderebene befindet sich ein Querschieber mit in Ruhestellung außerhalb der Förderebene liegenden Schiebearmen, hinter dem Querschieber ist ein vertikal verfahrbares Drehkreuz mit neben der Förderebene liegender Drehachse und etwa bis zur Mitte der Förderebene reichenden Flügeln angeordnet, wobei diesem zugeordnet durch Verkürzen einer Rolle eine Lücke zum Hochfahren des Drehkreuzes gebildet ist. Am Ende der Förderebene befindet sich ein Endanschlag. Hinter dem Drehkreuz ist ggf. ein vertikal durch eine Rollenlücke anheb- und versenkbarer Voranschlag angeordnet, im Bereich der Anschläge ist ein Schiebebalken vorgesehen, um die Einheiten in vorgebbaren Mustern einem Zwischenboden zuzuführen.

Die Verwendung von Rollen als Fördermittel für die Einheiten hat dabei den wesentlichen Vorteil, daß sie ständig angetrieben sein können, da sie nur eine geringe Berührungsfläche zu den Einheiten aufweisen und ein Weiterdrehen auch bei der angestrebten hohen Förderleistung beim Stoppen durch die Anschläge bzw. das Drehkreuz unschädlich ist. Außerdem werden die Einheiten durch das Drehkreuz selbst nicht auf der Stelle, sondern beim Fördern gedreht.

Das Drehkreuz kann durch die Rollenlücke unter die Ebene der Rollen gefahren werden, um Einheiten ungedreht durchzulassen, die an die dahinter befindlichen Anschläge gefahren und von dort quer abgefördert werden. Ebenso kann der erste Querschieber Einheiten vor Erreichen des Drehkreuzes Einheiten quer über die Förderebene schieben, die dann nicht gedreht werden.

Bei hochgefahrenem Drehkreuz gelangt die z.B. längs ausgerichtete Einheit in den Bereich zwischen zwei rechtwinklig zueinander stehenden Flügeln, schlägt gegen den querstehenden Flügel an, der um 90° gedreht wird - wobei der nächste Flügel wiederum quer ausgerichtet den nächsten Anschlag bildet - wobei die ständig fördernden Rollen die Einheiten mitnehmen und zusammen mit dem Drehkreuz um ebenfalls 90° drehen. Das Drehkreuz kann dann sofort abgesenkt werden um die nächste Einheit ungedreht durchzulassen, oder diese ebenfalls zu drehen.

Der hinter dem Drehkreuz befindliche erste Anschlag kann ebenfalls zwischen den Rollen hochgefahren und abgesenkt werden, da hierfür genügend Platz zwischen den Rollen besteht und diese relativ dünne Bleche sein können.

Die Einheiten werden je nach Ausrichtung und gewünschtem Muster an den hinter dem Drehkreuz liegenden Anschlägen einzeln oder zu zweit gesammelt und von dem diesen zugeordneten Schiebebalken auf den Zwischenboden abgeführt, zum gewünschten Lagemuster gesammelt und an die Palette lagenweise abgegeben.

Dem vor dem Drehkreuz befindlichen Querschieber, der eine ankommende Einheit um etwa Einheitenbreite quer über die Förderebene versetzt, kann vorteilhaft ebenfalls ein eine Rollenlücke durchgreifender versenkbarer schwertförmiger Anschlag zugeordnet sein.

Für sehr hohe Fördergeschwindigkeiten kann es weiterhin vorzuziehen sein, nicht sämtliche der Rollen anzutreiben, sondern einige frei laufen zu lassen. Ebenso ist es ohne weiteres möglich, hinter dem versenkbaren, dem Querschieber zugeordneten Anschlag oder dem Drehkreuz befindliche Rollen schneller anzutreiben, als z.B. die davorliegenden, um die abgebremsten Einheiten wieder zu beschleunigen.

Vorzugsweise sind jedoch einige Rollen, mindestens im Bereich des Drehkreuzes, mit einer Gummierung versehen (oder bestehen aus einer mit Gummi überzogenen Achse). Dadurch kann ein Abbremsen quer zur Förderrichtung bewegter Einheiten bewirkt werden, was insbesondere beim Drehen durch das Drehkreuz der Zentrifugalkraft entgegenwirkt.

Die Rollen selbst weisen insbesondere Metallische Oberflächen auf, da diese zu den Verpackungen der Einheiten einen besonders geeigneten Reibungskoeffizienten besitzen.

Eine weitere Steigerung der Förder- und Sammelgeschwindigkeit läßt sich erfindungsgemäß dadurch erreichen, daß man die im Drehkreuz befindlichen Einheit an diesem festhält. Dazu wird vorgeschlagen, die den Einheiten zugewandten Flächen, vorzugsweise den in Drehrichtung liegenden Flächen mit periodisch beaufschlagbaren Saugöffnungen auszustatten, die die Verpackungsoberfläche der Einheiten beim Drehen ansaugen und nach der Drehung um 90° wieder freigeben.

Da der Abbau des Unterdrucks zum Freigeben der Einheiten eine Zeitverzögerung beinhaltet, wird weiterhin vorgeschlagen, bei Erreichen der gedrehten Stellung Druckluftstöße auf die Saugöffnungen zu geben, um den Druckausgleich zu beschleunigen. Hierfür kann bevorzugt eine Anordnung dienen, bei welcher die Arme des Drehkreuzes mit einem Stempel verbunden sind, in dem jeweils den Armen zuordnete rohrförmige Luftleitungen verlegt sind, wobei die Enden der Luftleitungen über einen stehenden Teller gleiten und bei Erreichen der Saugstellung mit im Teller angeordneten Bohrungen fluchten, hierbei Luft abgesaugt wird und der Unterdruck durch gleitendes Dichten des Rohrendes über den Teller aufrechterhalten wird, bis das Rohr mit einer in Drehrichtung dahinter liegenden Druckausgleichsbohrung fluchtet.

Es sei darauf hingewiesen, daß schon ein geringer Unterdruck bei entsprechender Fläche der Saugöffnung ausreicht, um die Einheiten beim Drehen sicher zu fixieren. Hierzu können die Saugöffnungen insbesondere konisch ausgebildet sein.

Anhand der beiliegenden Figuren wird eine Ausführungsform der vorliegenden Erfindung näher erläutert.
- **Figur 1**: zeigt die erfindungsgemäße Vorrichtung in perspektivischer Darstellung.
- **Figur 2**: zeigt diese mit aktiviertem Drehkreuz.
- **Figur 3**: zeigt das Drehen einer verpackten Einheit.
- **Figur 4**: zeigt einen zusätzlichen Anschlag.
- **Figur 5**: zeigt das Drehkreuz mit Luftführung beim Ansaugen.
- **Figur 6**: zeigt den Teller zum Anschluß von Druck und Saugleitungen.
- **Figur 7**: zeigt den Anschluß an einen Saugmotor.
- **Figur 8**: zeigt das Drehkreuz unter Zuführung von Druckluft.
- **Figur 9**: zeigt hierzu den Anschluß an eine Druckquelle.

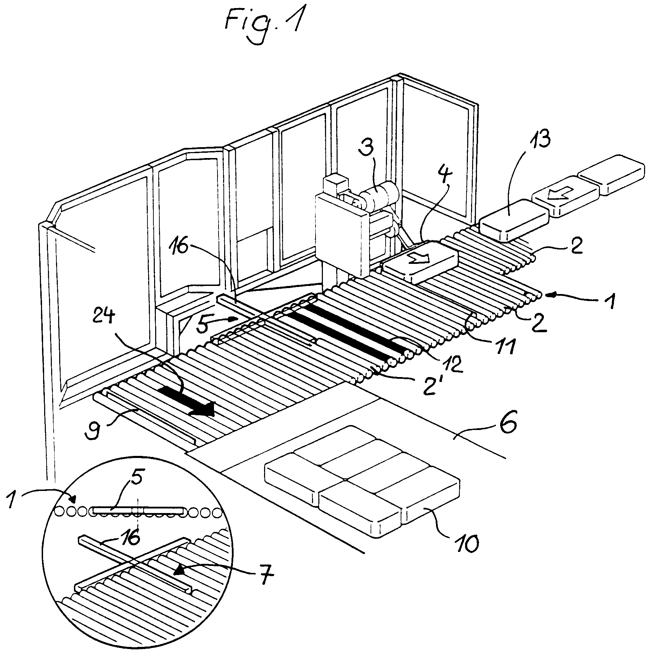

**Figur 1** zeigt eine Förderebene 1 mit separat angetriebenen Rollen 2 sowie gummierten Rollen 12 (schwarz gezeichnet) über die umhüllte, zu Einheiten 13 zusammengefaßten Haushaltspapierrollen, welche hier längs ausgerichtet angefördert werden. Diese Einheiten 13 können durchlaufen bis zu einem Endanschlag 9.

Am Förderebeneneingang befindet sich ein Querschieber 3 (Rotationsschieber) mit zwei Schiebearmen 4, der Einheiten 13 um eine Breite quer versetzen kann. Derart können am Endanschlag 9 zwei oder mehr Einheiten 13 gesammelt und über einen hier ebenfalls befindlichen, durch einen Endquerscheiber 24 (durch einen Pfeil angedeutet) auf einen Zwischenboden 6 abgegeben werden.

Die Einheiten können aber auch um 90° gedreht werden, wozu ein Drehkreuz 5 mit vier Flügeln 16 dient, dessen Drehachse unmittelbar neben der Außenkante der Rollenförderebene 1 liegt. Das Drehkreuz 5 ist anheb- und absenkbar. Dazu dient die Rolle 2' zur Bildung einer Rollenlücke 7 auf etwa die Hälfte gekürzt, so daß die Flügel 5 unterhalb der Oberfläche der Rollenebene gebracht werden können. Unmittelbar nach Anlage einer Einheit wird das dazu angehobene Drehkreuz 5 z.B. durch einen mechanischen oder optischen Auslöser in Drehung versetzt, die hier längs angeförderte Einheit 13 unter gleichzeitiger Wanderung deren Schwerpunkts geschwenkt und kann nunmehr querliegend z.B. gegen den Endanschlag 9 abgefördert werden.

Die gummierten Rollen 12 bremsen die Querbewegung der Einheiten 13 im Bereich der Schiebearme 4 ab. bzw. wirken der durch das Drehkreuz 5 bewirkten Zentrifugalkraft entgegen und verhindern ein Auswandern der Einheiten 13 beim Drehen.

Das auf dem Zwischenboden 6 liegende Muster 10 ist dabei so hergestellt, daß zunächst eine Einheit gedreht und zwei weitere senkrecht gegen diese gesammelt werden, um diese mit Hilfe des Endquerschiebers 24 (Pfeil) in die entferntere Lage abzuschieben, um gegen diese eine gleiche zu sammeln. Dieses Grundmuster kann beliebig variiert werden.

Im Kreisausschnitt ist die etwa oberflächengleiche Lage des abgesenkten Drehkreuzes 5 gegenüber der Förderebene angedeutet. Dem Querschieber 3 kann ein den Zwischenraum zwischen zwei Rollen 2 durchgreifender versenkbarer Anschlag 11 zugeordnet sein.

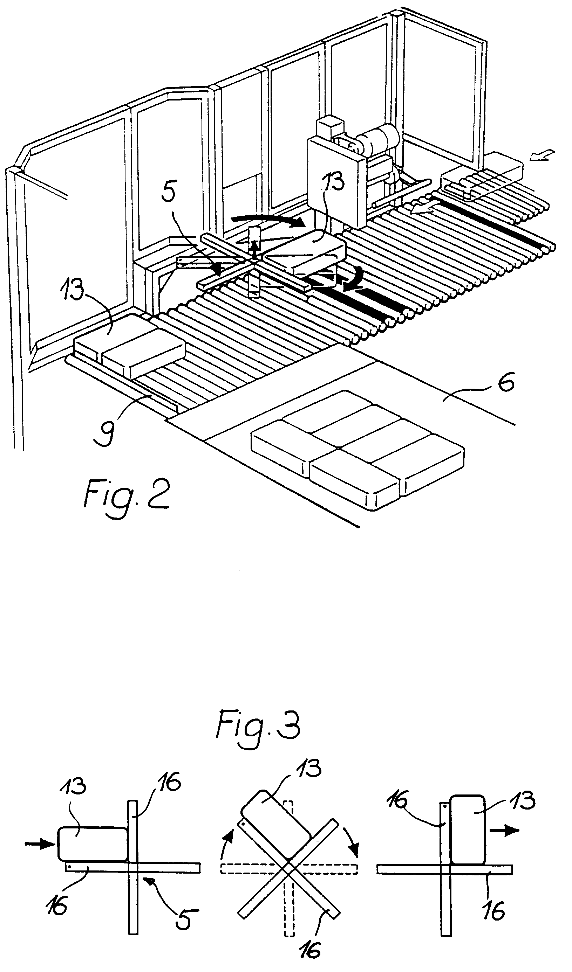

**Figur 2** zeigt das in Rotation befindliche Drehkreuz 5 mit anliegender Einheit 13 und am Endanschlag 9 befindlichen zwei parallen längs ausgerichteten Einheiten, gegen die die gedrehte Kante fluchtend gefahren wird.

Das Drehen der Einheiten ist in **Figur 3** gezeigt, wobei die Einheit 13 innerhalb der zwei Flügel 16 des Drehkreuzes 5 liegt.

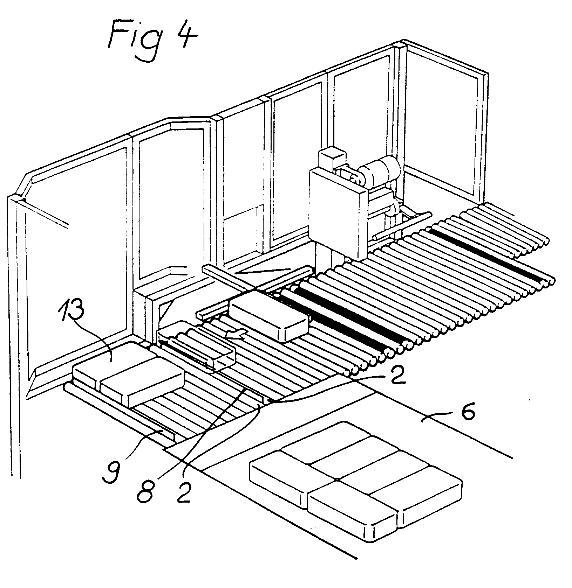

In **Figur 4** ist gezeigt, daß vor dem Endanschlag 9 zusätzlich für eine exaktere Führung beim Abschieben auf den Zwischenboden 6 ein versenkbarer, die Lücke zwischen zwei Rollen 2, 2' durchgreifender Voranschlag 8 vorgesehen sein kann, der hier zur besseren Erkennbarkeit vorgesetzt gezeichnet ist, ansich jedoch unmittelbar hinter den am Endanschlag 9 liegenden Einheiten 13 liegt.

Von dem Zwischenboden werden nach dem Bilden einer vollständigen Lage die Einheiten auf eine Palette abgelegt, wobei hier durch unterschiedliche Musterbildung ein stabiler Aufbau auch ohne die üblicherweise verwendeten Papierzwischenlagen hergestellt werden kann.

Das Anheben und Absenken der schwertförmigen Anschläge 8 und 11 (Figur 1) geschieht ebenso wie die Betätigung des Drehkreuzes vorzugsweise programmgesteuert.

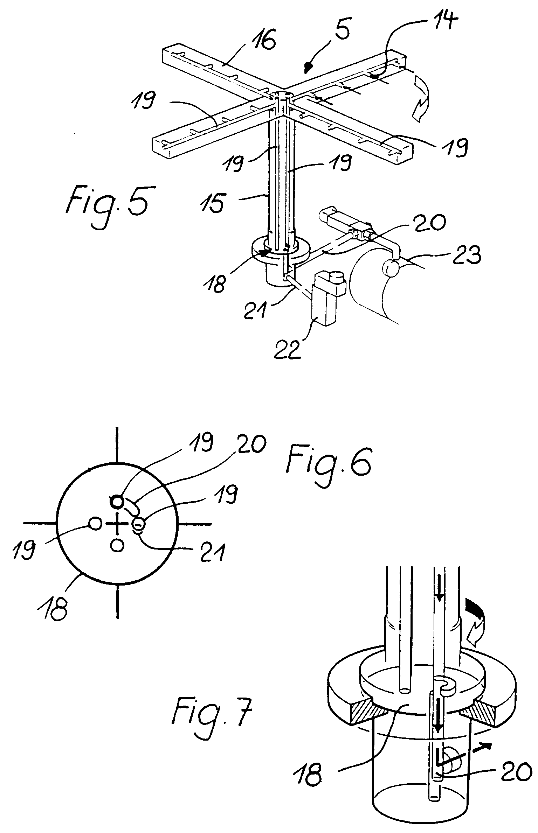

Bei beschleunigtem Fördern und Musterbilden ist es erforderlich, die Einheiten beim Drehen im Drehkreuz zu fixieren. In **Figur 5** sind dazu die Flügel 16 des Drehkreuzes 5 mit Saugöffnungen 14 ausgestattet, die gemeinsam oder vorzugsweise wie dargestellt über separate Luftleitungen 19 an einen Sauganschluß 20 mit Saugmotor 23 und danach an eine Druckleitung 21 mit Drucklufterzeuger 22 anschließbar sind. Das Drehkreuz 5 befindet sich dabei auf einem Stempel 15 in dem die Leitungen 19 verlegbar sind. Letztere laufen auf einem Teller 18.

**Figur 6** zeigt den Teller 18 sowie die darauf liegenden Enden der vier Saugleitungen 19 sowie den darunter liegenden Sauganschluß 20 (fett angedeutet) sowie den um etwa 90° versetzten Druckanschluß 21. Zwischen diesen Positionen dichten die Enden der Saugleitungen 19 auf dem Teller 18.

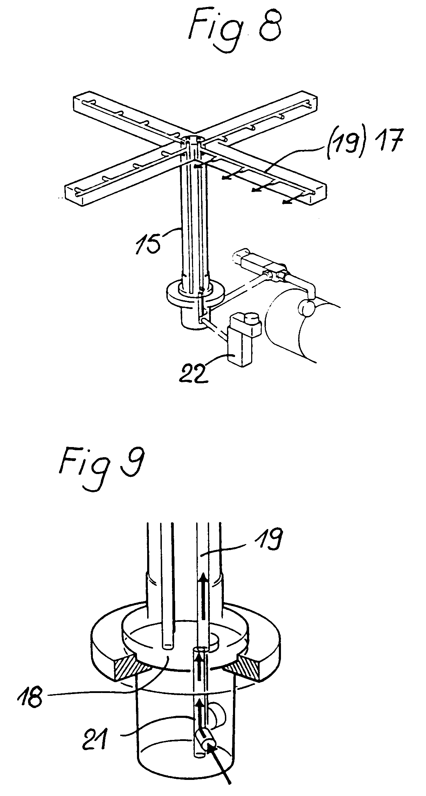

**Figur 7** zeigt in Vergrößerung den Teller 18 sowie in diesem Falle die Position der Saugleitung 19 fluchtend über den Sauganschluß 20. Wird das Drehkreuz mit dem Stempel 15 weitergedreht, so bleibt der Unterdruck bis zum Erreichen der Position über der Leitung für den Leitung für den Druckausgleich aufrechterhalten und nach gegebenenfalls erfolgendem Druckstoß wird die saugend festgehaltene Einheit freigegeben.

Dies in den **Figuren 8** und **9** dargestellt, wobei die Pfeile den Druckausgleich andeuten.

### Bezugszeichenliste

- 1: Förderebene
- 2, 2': Rollen
- 3: Querschieber (Rotationsschieber)
- 4: Schiebearm
- 5: Drehkreuz
- 6: Zwischenboden
- 7: Rollenlücke
- 8: Voranschlag
- 9: Endanschlag
- 10: Sammelmuster
- 11: Anschlag
- 12: gummierte Rollen
- 13: Einheiten
- 14: Saugöffnungen
- 15: Stempel
- 16: Flügel
- 17: Luftleitung
- 18: Teller
- 19: Saugleitung
- 20: Sauganschluß
- 21: Druckleitung
- 22: Druckluftanschluß
- 23: Saugmotor
- 24: Endquerschieber

## Patentansprüche

1. Vorrichtung zum Sammeln von zu Einheiten verpackten Gegenständen auf Paletten, wobei die Einheiten ausgerichtet dieser Vorrichtung zugeführt werden, mit folgenden Merkmalen :
a) die Vorrichtung weist eine Vielzahl von angetriebenen zu einer Förderebene (1) ausgerichteten Rollen (2) auf
b) am Eingang der Förderebene (1) befindet sich ein Querschieber mit in Ruhestellung außerhalb der Förderebene liegenden Schiebearmen (4)
c) hinter dem Querschieber (3) ist ein vertikal verfahrbares Drehkreuz (5) mit neben der Förderebene liegender Drehachse und etwa bis zur Mitte der Förderebene reichenden Flügeln angeordnet, welche sich seitlich an die zu drehenden Einheiten anlagen, wobei diesem zugeordnet durch Verkürzen einer Rolle (2') eine Lücke zum Hochfahren des Drehkreuzes (5) gebildet ist
d) am Ende der Förderebene (1) befindet sich ein Endanschlag (9), hinter dem Drehkreuz (5) ist ggf. ein vertikal durch eine Rollenlücke (7) anheb- und versenkbarer Voranschlag (8) angeordnet
e) im Bereich der Anschläge (8,9) ist ein Endquerschieber (24) vorgesehen, um die Einheiten (13) in vorgebbaren Mustern (10) einem Zwischenboden (6) zuzuführen.

2. Vorrichtung nach Anspruch 1, **dadurch gekennzeichnet**, daß dem Querschieber (3) ebenfalls ein versenkbarer, eine Rollenlücke durchgreifender Anschlag (11) zugeordnet ist.

3. Vorrichtung nach Anspruch 1 oder 2, **dadurch gekennzeichnet**, daß einige Rollen (12) im Bereich des Querschiebers (3) und/oder des Drehkreuzes (5) gummiert sind.

4. Vorrichtung nach einem der Ansprüche 1 bis 3 **dadurch gekennzeichnet**, daß die Rollen (2, 2') metallische Oberflächen aufweisen.

5. Vorrichtung nach einem der Ansprüche 1 bis 4, **dadurch gekennzeichnet**, daß das Drehkreuz (5) periodisch beaufschlagbare, den Einheiten (13) zugewandte Saugöffnungen (14) aufweist.

6. Vorrichtung nach Anspruch 5, **dadurch gekennzeichnet**, daß die Saugöffnungen (14) periodisch mit Druckluft beaufschlagbar sind.

7. Vorrichtung nach Anspruch 5 oder 6, **dadurch gekennzeichnet**, daß das Drehkreuz (5) auf einem Stempel (15) angeordnet ist, wobei jedem Flügel (16) eine Luftleitung (17) zugeordnet ist, die auf einem Teller (18) stehen und nacheinander mit einer mit einer Saugleitung (19) mit Sauganschluß (20) und einer Druckleitung (21) mit Drucklufterzeuger (22) in Verbindung stehen.

## Claims

1. Device for the collection on pallets of articles packaged into units, whereby the units are supplied aligned to this device, with the following features:
a) the device has a plurality of driven rollers (2) aligned to a conveying plane (1),
b) on the inlet of the conveying plane (1) is present a transverse slide with pushing arm (4) lying in the stationary position outside of the conveying plane,
c) behind the transverse slide (3) is a vertically movable star wheel (5) with rotational axis lying next to the conveying plane and wings arranged extending approximately to the middle of the conveying plane which lie laterally against the units to be turned, whereby, associated with these, a gap is formed by shortening of a roller (2') for the lifting up of the star wheel (5),
d) on the end of the conveying plane (1) is present an end stop (9), behind the star wheel (5) is possibly provided a trigger stop (8) which can be raised and lowered vertically through a roller gap (7),
e) in the region of the stops (8,9) is provided an end transverse slide (24) in order to guide the units (13) in predetermined pattern (10) to an intermediate bottom (6).

2. Device according to claim 1, characterised in that with the transverse slide (3) is also associated a lowerable stop (11) passing through a roller gap.

3. Device according to claim 1 or 2, characterised in that some rollers (12) are rubberised in the region of the transverse slide (3) and/or of the star wheel (5).

4. Device according to one of claims 1 to 3, characterised in that the rollers (2,2') have metallic surfaces.

5. Device according to one of claims 1 to 4, characterised in that the star wheel (5) has periodically impingeable suction openings (14) facing the units (13).

6. Device according to claim 5, characterised in that the suction openings (14) are periodically impingeable with compressed air.

7. Device according to claim 5 or 6, characterised in that the star wheel (5) is arranged on a piston (15), whereby with each wing (16) is associated an air pipe (17) which stands on a plate (18) and successively stands in connection with a suction connection (20) with a suction pipe (19) and a pressure pipe (21) with compressed air producer (22).

## Revendications

1. Dispositif de récolte d'objets emballés en unités sur des palettes, dans lequel les unités sont amenées à ce dispositif de façon alignée, comprenant les particularités suivantes :
a) le dispositif comporte un grand nombre de rouleaux (2) entraînés, alignés en un plan d'avancement (1),
b) à l'entrée du plan d'avancement (1) se trouve un poussoir transversal avec des bras de poussée (4) qui en position de repos se trouvent à l'extérieur du plan d'avancement,
c) derrière le poussoir transversal (3) est agencé un tourniquet (5) verticalement déplaçable, présentant un axe de rotation situé à côté du plan d'avancement et des ailes qui s'étendent approximativement jusqu'au milieu du plan d'avancement et qui s'appuient latéralement sur les unités à tourner, un vide pour l'élévation du tourniquet (5) étant formé d'une façon adjacente à celui-ci, par raccourcissement d'un rouleau (2'),
d) à l'extrémité du plan d'avancement (1) se trouve une butée d'extrémité (9), une butée préliminaire (8) qui peut être élevée et escamotée verticalement à travers un vide entre rouleaux (7) étant éventuellement agencée derrière le tourniquet (5),
e) un poussoir transversal d'extrémité (24) est prévu dans la zone des butées (8, 9) pour amener les unités (13) à un fond intermédiaire (6) suivant des dessins prédéterminables (10).

2. Dispositif suivant la revendication 1, caractérisé en ce qu'une butée (11) escamotable, qui passe à travers un vide entre rouleaux, est également adjointe au poussoir transversal (3).

3. Dispositif suivant l'une des revendications 1 et 2, caractérisé en ce que certains rouleaux (12) dans la zone du poussoir transversal (3) et/ou du tourniquet (5) sont caoutchoutés.

4. Dispositif suivant l'une des revendications 1 à 3, caractérisé en ce que les rouleaux (2, 2') présentent des surfaces métalliques.

5. Dispositif suivant l'une des revendication 1 à 4, caractérisé en ce que le tourniquet (5) présente des orifices d'aspiration (14) tournés vers les unités (13) et sollicitables de manière périodique.

6. Dispositif suivant la revendication 5, caractérisé en ce que les orifices d'aspiration (14) peuvent être alimentés en air comprimé de manière périodique.

7. Dispositif suivant l'une des revendications 5 et 6, caractérisé en ce que le tourniquet (5) est agencé sur un poinçon (15), un conduit à air (17) étant adjoint à chaque aile (16), les conduits à air reposant sur un plateau (18) et étant successivement en communication avec un conduit d'aspiration (19) avec raccord d'aspiration (20) et un conduit sous pression (21) avec générateur d'air comprimé (22).
